# EUROPÄISCHE PATENTSCHRIFT

(11) **EP 1 724 499 B1**
(45) Veröffentlichungstag und Bekanntmachung des Hinweises auf die Patenterteilung: **10.11.2010**
(21) Anmeldenummer: 06009838.1
(22) Anmeldetag: 12.05.2006
(51) Int. Cl.: F16H 61/44

(54) **Antriebsvorrichtung**
Drive unit
Ensemble d'entraînement

(30) Priorität: 20.05.2005 DE 202005007970 U
(43) Veröffentlichungstag der Anmeldung: 22.11.2006
(73) Patentinhaber: Liebherr Machines Bulle SA, 1630 Bulle (CH)
(72) Erfinder: Eckardt, Erich, 1642 Sorens (CH); Progin, Pascal, 1630 Bulle (CH); Schwede, Franz-Josef, 3280 Murten (CH)
(74) Vertreter: Thoma, Michael

(56) Entgegenhaltungen:
- EP-A- 0 026 115
- EP-A- 0 483 543
- WO-A-97/29308
- DE-A1- 19 751 001
- DE-U1-202004 009 767

## Beschreibung

Die vorliegende Erfindung betrifft eine Antriebsvorrichtung für ein Fahrzeug und/oder eine Baumaschine, mit einer Hydraulikmotoreinheit, die zwei hintereinander geschaltete Hydraulikmotoren aufweist, deren Motorwellen durch eine Kupplung miteinander drehfest verbindbar sind, wobei die Kupplung lösbar ausgebildet und durch eine Betätigungsvorrichtung im Betrieb der Hydraulikmotoreinheit aus- und einkuppelbar ist, wobei zumindest einer der Hydraulikmotoren unabhängig vom Betrieb des anderen Hydraulikmotors hydraulisch abschaltbar ausgebildet ist und wobei eine Steuereinrichtung zum Steuern des Ein- und/oder Auskuppelvorgangs und/oder zum Steuern des Drehmoments und der Drehzahl des abschaltbaren Hydraulikmotors vorgesehen ist.

Solche Antriebseinrichtungen mit einer Hydraulikmotoreinheit finden regelmäßig bei Baumaschinen Verwendung und können als Einzelradantrieb eingebaut sein oder mit ihrer Motorwelle das Antriebsritzel eines Getriebes, einer Antriebsachse oder auch die Welle eines Hubantriebes antreiben. Durch die beiden hintereinander geschalteten Hydraulikmotoren können insbesondere beim Anfahren hohe Drehmomente erzeugt werden. Nach Überwindung des Anfahrwiderstandes ist bei höheren Geschwindigkeiten allerdings ein solches hohes Drehmoment nicht mehr notwendig. Hier wäre es wünschenswert, mit geringeren Verlusten fahren zu können.

Eine Antriebsvorrichtung mit einer Hydraulikmotoreinheit der vorgenannten Art zeigt beispielsweise die DE 42 28 294 B4, die vorschlägt, zwei Hydraulikmotoren hintereinander zu schalten und mit ihren Motorwellen drehfest zu koppeln, so dass auf beiden Seiten des Motorgehäuses ein Motorwellen-Antriebsabschnitt herausragt, welcher mit der Antriebsachse eines allradgetriebenen Fahrzeugs gekoppelt wird. Es ist dabei vorgesehen, dass die Schrägscheiben der als Axialkolbenmotoren ausgebildeten Hydraulikmotoren jeweils separat für jeden Motor verstellt werden können, wodurch sich die Drehmomente der beiden Hydraulikmotoren unterschiedlich ergänzen und das Drehmoment der gesamten Hydraulikmotoreinheit insgesamt gesteuert werden kann. Auch bei dieser vorbekannten Antriebseinrichtung jedoch wäre es wünschenswert, im Betrieb bei höheren Geschwindigkeiten und niedrigeren erforderlichen Drehmomenten die Verluste verringern zu können und damit einen effizienteren Betrieb zu ermöglichen.

Eine Antriebsvorrichtung der eingangs genannten Gattung ist aus der Schrift EP-A-0026115 bekannt, die einen hydrostatischen Antrieb beschreibt, bei dem ein Motor mit festem Hubraum von einer Pumpe mit variablem Fördervolumen durch eine Einrückkupplung entkuppelt werden kann. Ferner beschreibt die Schrift WO 97/29308 einen hydraulischen Antrieb für einen Bagger, der zwei Motoren aufweist, die einlassseitig mit einem Getriebe verbindbar sind. Die dazwischen geschaltete Kupplung wird in Abhängigkeit eines Drucks betätigt, der ein Maß für die Drehzahl des abzukuppelnden Motors ist, und zwar dann, wenn besagter Druck einer Drehzahl entspricht, bei der der Betrieb des Motors redundant wird.

Der vorliegenden Erfindung liegt hiervon ausgehend die Aufgabe zugrunde, eine verbesserte Antriebsvorrichtung der eingangs genannten Art zu schaffen, die Nachteile des Standes der Technik vermeidet und letzteren in vorteilhafter Weise weiterbildet. Vorzugsweise soll die Antriebseinrichtung dahingehend verbessert werden, dass bei höheren Geschwindigkeiten die Antriebsvorrichtung geringere Verluste erzeugt.

Erfindungsgemäß wird diese Aufgabe durch eine Antriebsvorrichtung gemäß Anspruch 1 gelöst. Bevorzugte Ausgestaltungen der Erfindung sind Gegenstand der abhängigen Ansprüche.

Erfindungsgemäß wird also vorgeschlagen, bei dem Doppelmotor eine hydraulische und mechanische Trennung der beiden Hydraulikmotoren vorzusehen. Die Kupplung ist erfindungsgemäß lösbar ausgebildet und kann durch eine Betätigungsvorrichtung auch im Betrieb der Hydraulikmotoreinheit aus- und eingekuppelt werden. Zumindest einer der Hydraulikmotoren ist unabhängig vom Betrieb des anderen Hydraulikmotors hydraulisch abschaltbar ausgebildet, so dass insbesondere bei höheren Geschwindigkeiten die Antriebseinrichtung mit nur einem Hydraulikmotor fahren kann. Da der andere Hydraulikmotor mechanisch ausgekuppelt und abgeschaltet werden kann, können dessen Schleppverluste völlig beseitigt und diese damit insgesamt minimiert werden. Nichtsdestotrotz erlaubt die ein- und auskuppelbare Ausbildung der Verbindung der beiden Hydraulikmotoren auch im Betrieb bei laufendem Motor und Drehmomenterzeugung jederzeit, den abgeschalteten Hydraulikmotor bei Bedarf wieder zuzuschalten, beispielsweise wenn große Bremsmomente erzeugt werden sollen oder bei Bergfahrten wieder größere Antriebsmomente benötigt werden. Um insbesondere im ausgekuppelten Zustand eines der Aggregate abschalten zu können, ist insbesondere der hydraulische Schaltkreis zur Ansteuerung und/oder zur Versorgung des jeweiligen Hydraulikmotors derart ausgebildet, dass dieser Hydraulikmotor drucklos schaltbar ist. Grundsätzlich wäre es auch denkbar, bei weiterhin anstehendem Hydraulikdruck lediglich das Schluckvolumen des jeweiligen Hydraulikmotors auf Null zu stellen. Die vorgenannte Drucklosschaltung des Hydraulikmotors ist jedoch im Hinblick auf eine Minimierung der Verluste vorteilhaft.

In Weiterbildung der Erfindung wird das Ein- und Auskuppeln der Kupplung zwischen den beiden Motorwellen von einer Steuereinrichtung nach einem vorbestimmten Ablauf gesteuert. Die Steuereinrichtung kann insbesondere eine Drehzahlerfassungsvorrichtung zur Erfassung der Motorwellendrehzahl aufweisen und das hydraulische und/oder mechanische Wegschalten eines der Hydraulikmotoren in Abhängigkeit der Motordrehzahl steuern. Insbesondere kann die Steuereinrichtung bei Überschreiten einer vorbestimmten Motordrehzahl einen der Hydraulikmotoren hydraulisch gegen Null steuern, so dass dieser Hydraulikmotor kein Drehmoment mehr abgibt und sozusagen leer mitläuft. Alternativ oder zusätzlich kann die Steuereinrichtung bei Überschreiten der genannten vorbestimmten Drehzahl den Hydraulikmotor durch Lösen der Kupplung zwischen den beiden Motorwellen auch mechanisch von dem anderen Hydraulikmotor abkuppeln, so dass das Drehmoment der Antriebsvorrichtung lediglich noch durch den anderen Hydraulikmotor geliefert wird.

Beim Abschalten des einen Hydraulikmotors wird dabei vor dem Lösen der Kupplung zunächst von hydraulischen Steuermitteln das Drehmoment des abzukuppelnden Hydraulikmotors gegen Null gesteuert und erst in einem darauf folgenden Schritt die Kupplung gelöst, so dass Drehmomentstöße vermieden und ein sanftes Abschalten erreicht werden kann. Umgekehrt wird vor dem Einkuppeln des abgeschalteten Hydraulikmotors die Drehzahl des einzukuppelnden Hydraulikmotors etwa auf die Drehzahl des laufenden Hydraulikmotors gesteuert, so dass beim Einkuppeln der Kupplung keine größeren Drehzahlunterschiede zwischen den beiden Motorwellen zu überwinden sind.

Insbesondere umfassen die hydraulischen Steuermittel zur Steuerung des Drehmoments des Hydraulikmotors Mittel zur Veränderung dessen Schluckvolumens. Gegebenenfalls kann auch durch eine Änderung des Versorgungsdrucks das Drehmoment in der gewünschten Weise eingestellt werden. Über die vorgenannten Mittel zur Veränderung des Schluckvolumens und/oder die Druckänderung kann auch die gewünschte Steuerung der Drehzahl des einzukuppelnden Hydraulikmotors erreicht werden.

Um beim Einkuppeln Drehzahlunterschiede zwischen den beiden Motorwellen bestmöglich zu vermeiden, kann die Steuereinrichtung eine Synchronisiereinrichtung aufweisen, die mittels einer Drehzahlerfassungseinrichtung eine Drehzahlabweichung zwischen den Motorwellen der beiden Hydraulikmotoren erfasst und die hydraulischen Steuermittel zur Steuerung der Drehzahl des einzukuppelnden Hydraulikmotors in Abhängigkeit der erfassten Drehzahlabweichung ansteuert. Hierdurch kann die Drehzahlabweichung gegen Null geregelt werden, bevor die Kupplung in ihre Eingriffsstellung gebracht wird.

Die beiden Hydraulikmotoren können verschieden ausgebildet sein. Grundsätzlich kommt jeder Hydraulikmotor mit Durchtrieb in Betracht. Beispielsweise können Zahnrad- oder Flügelzellenmotoren zum Einsatz kommen. Nach einer bevorzugten Ausführung der Erfindung sind Axialkolbenmotoren hintereinander geschaltet, deren Schluckvolumen mittels verstellbarer Schrägscheiben verändert werden kann. Zweckmäßigerweise besitzen beide Hydraulikmotoren dieselbe Ausbildung vorzugsweise als Axialkolbenmaschinen, die mit ihren Motorwellen koaxial zueinander angeordnet sein und ein gemeinsames Motorgehäuses, das zweckmäßigerweise mehrteilig ausgebildet ist, aufweisen können.

Die Kupplung zwischen den Motorwellen der beiden Hydraulikmotoren kann grundsätzlich verschieden ausgebildet sein. Nach einer vorteilhaften Ausführung der Erfindung ist die Kupplung hydraulisch betätigbar und von der Betätigungsvorrichtung mit einem veränderbaren Steuerdruck beaufschlagbar, in Abhängigkeit dessen die Kupplung ein- und auskuppelt.

Vorteilhafterweise kann die Kupplung sowohl Reibkupplungsmittel als auch Formschlusskupplungsmittel aufweisen, die nach einer vorbestimmten Abfolge betätigbar sind. Beispielsweise kann die Kupplung sowohl eine Lamellenkupplungseinrichtung und eine auf die jeweilige Motorwelle formschlüssig aufschiebbare, insbesondere verzahnte Kupplungshülse aufweisen. Das Vorsehen von sowohl Reibkupplungsmitteln als auch Formschlusskupplungsmitteln erlaubt es, beim Einkuppeln zunächst einen Reibschluss zwischen den beiden Motorwellen herzustellen, über den ggf. noch bestehende Drehzahlabweichungen ausgeglichen werden können. Greifen die Reibschlussmittel so weit, dass die beiden Motorwellen synchron zueinander laufen, können die Formschlussmittel sanft in Eingriff gebracht werden.

Die vorliegende Erfindung wird nachfolgend anhand eines bevorzugten Ausführungsbeispiels und zugehöriger Zeichnungen näher erläutert. In den Zeichnungen zeigen:
- Fig. 1:: einen Längsschnitt durch die Hydraulikmotoreinheit der Antriebsvorrichtung nach einer bevorzugten Ausführung der Erfindung,
- Fig. 2:: den hydraulischen Schaltkreis zur Steuerung und Versorgung der beiden Hydraulikmotoren der Hydraulikmotoreinheit aus Fig. 1 in schematischer Darstellung,
- Fig. 3:: eine vergrößerte Schnittansicht der Kupplung zwischen den Motorwellen der beiden Hydraulikmotoren der Hydraulikmotoreinheit aus Fig. 1, und
- Fig. 4:: ein Ablaufdiagramm, das den Verlauf verschiedener Steuer- und Betriebsparameter der Hydraulikmotoreinheit aus Fig. 1 über der Zeit für einen Anfahrvorgang und einen darauf folgenden Abschaltvorgang zeigt.

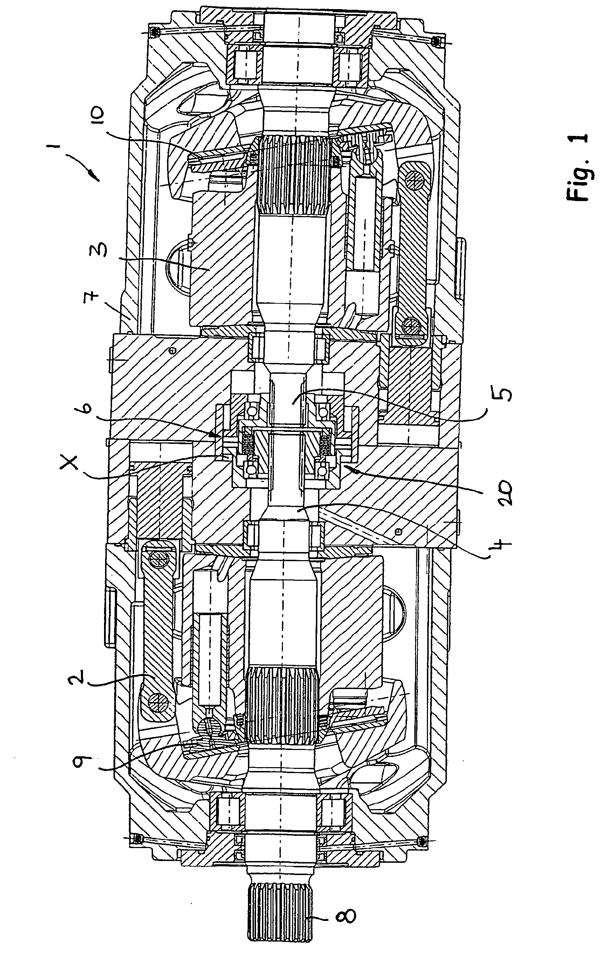

Die in Figur 1 gezeigte Hydraulikmotoreinheit 1 umfasst zwei jeweils als Axialkolbenmaschinen ausgebildete Hydraulikmotoren 2 und 3, die mit ihren Motorwellen 4 und 5 koaxial zueinander angeordnet und in einem gemeinsamen Motorgehäuse 7 aufgenommen sind. Die beiden Motorwellen 4 und 5 sind durch eine Kupplung 6 miteinander drehfest verbindbar, so dass die beiden Hydraulikmotoren 2 und 3 synchron miteinander betreibbar sind. Auf der in Figur 1 linken Seite des Motorgehäuses 7 tritt die Motorwelle 4 aus dem Motorgehäuse 7 heraus. Mit dem entsprechenden Antriebsabschnitt 8 kann ein einzelnes Rad eines Fahrzeugs, eine Achse oder auch ein Hubwerk einer Baumaschine ggf. unter Zwischenschaltung eines Getriebes angetrieben werden.

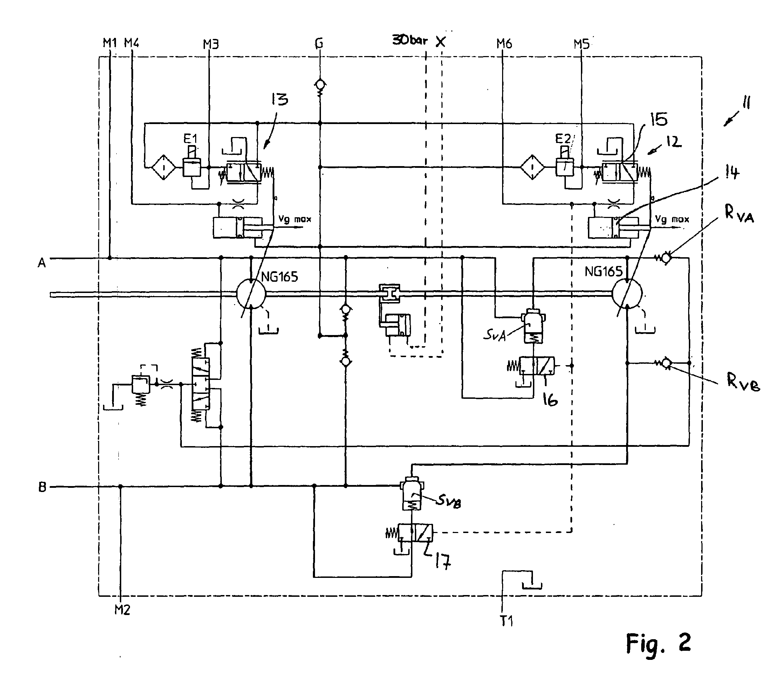

Wie Figur 1 zeigt, umfasst jeder der Hydraulikmotoren 2 und 3 Schrägscheiben 9 und 10, die in ihrer Neigung verstellbar sind, so dass das Schluckvolumen der Hydraulikmotoren 2 und 3 und damit deren Drehmoment und Geschwindigkeit einstellbar ist. Der Betrieb der Hydraulikmotoreinheit 1 wird von dem in Figur 2 gezeigten hydraulischen Schaltkreis 11 und dessen hydraulische Steuermittel gesteuert, die von einer elektronischen Steuereinrichtung ansteuerbar sind. Insbesondere können die vorgenannten Schrägscheiben 9 und 10 der beiden Hydraulikmotoren 2 und 3 über den hydraulischen Schaltkreis 11 und dessen hydraulische Steuerelemente verstellt und die Kupplung 6 ein- und ausgekuppelt werden.

Im Betrieb wird den beiden Hydraulikmotoren 2 und 3 je nach gewünschter Drehrichtung über die Arbeitsanschlüsse A bzw. B unter Druck stehendes Hydraulikfluid zugeführt, wobei je nach gewünschter Drehrichtung der eine Anschluss die Hochdruckseite und der andere Anschluss die Niederdruckseite bildet. Zur Drehmomentveränderung könnte grundsätzlich natürlich der Hydraulikdruck, der von den Arbeitsanschlüssen A bzw. B. bereitgestellt wird, variiert werden. Insbesondere jedoch können hierzu die Schrägscheiben 9 und 10 und damit das Schluckvolumen der beiden Hydraulikmotoren 2 und 3 über Steuermittel 12 bzw. 13 eingestellt werden, die jeweils einen Stellzylinder 14 sowie hydraulische Steuerelemente 15 zur Steuerung des den Stellzylinder 14 beaufschlagenden Drucks umfassen.

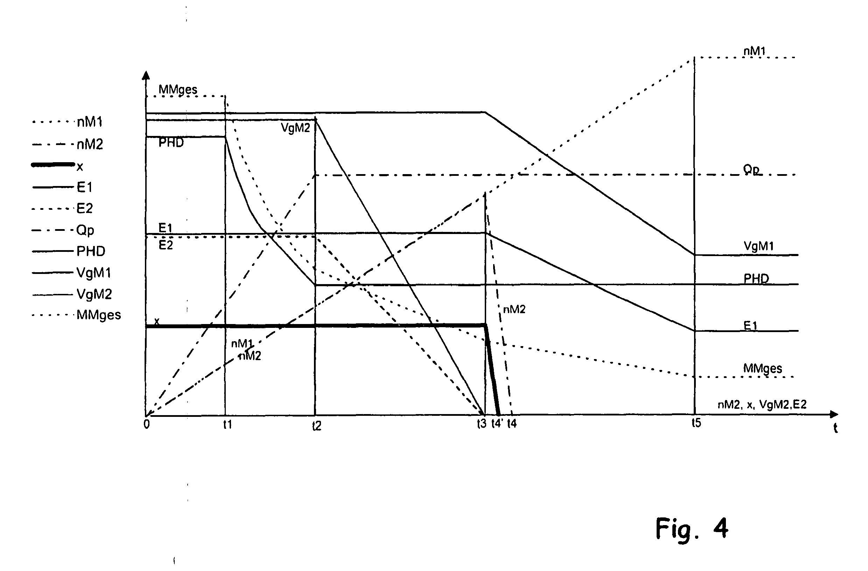

Soll die Hydraulikmotoreinheit 1 mit maximalem Drehmoment angefahren werden, werden zunächst die Schrägscheiben 9 und 10 auf maximales Schluckvolumen gestellt. Hierzu wird der Hilfsdruck G (vgl. Figur 2) angelegt und die Ventile E1 und E2 mit maximalem Strom belegt, so dass die Ventile E1 und E2 durchschalten. Hierdurch öffnen die nachgeschalteten Steuerventile 12 bzw. 13, wodurch die großen Stellkolbenflächen der Stellzylinder 14 derart mit Druck beaufschlagt werden, dass die damit verbundenen Schrägscheiben 9 und 10 auf volles Schluckvolumen gestellt werden. Durch den von der großen Stellkolbenfläche des Stellzylinders 14 des Hydraulikmotors 3 auf die Wegeventile 16 und 17 rückgeführten Druck sind die Sperrventile SVA und SVB offen, wodurch der Hydraulikdruck von den Arbeitsanschlüssen A bzw. B her auf die Hydraulikmotoren 2 und 3 gegeben wird. Die Hydraulikmotoren 2 und 3 erzeugen hierdurch in der einen oder in der anderen Drehrichtung durch den maximalen Druck an dem Arbeitsanschluss A bzw. B das maximale Antriebsdrehmoment. Diesen Betriebszustand zeigt das Ablaufdiagramm nach Figur 4 bis zum Zeitpunkt t₁.

Dementsprechend steigen sowohl die Drehzahl der Motorwellen 4 und 5 der beiden Hydraulikmotoren 2 und 3 als auch der Förderstrom Qp zunächst kontinuierlich an. Die Drehzahlen der beiden Motorwellen 4 und 5 sind zu diesem Zeitpunkt zueinander synchron, da die beiden Motorwellen 4 und 5 durch die Kupplung 6 miteinander verriegelt sind.

Erreicht die Motordrehzahl im Zeitpunkt t₂ einen vorbestimmten Wert (vgl. Figur 4), wird das Drehmoment des zweiten Hydraulikmotors 3 reduziert, und zwar durch Reduzierung des Ansteuerstromes E2 und/oder des Hydraulikdrucks. Hierdurch verringert sich das Schluckvolumen V_{gM2} und dadurch das Drehmoment. Bei gleich bleibender Versorgungsmenge erhöht sich die Drehzahl mit abnehmendem Schluckvolumen.

Wie Figur 4 zeigt, wird bis zum Zeitpunkt t₃ kontinuierlich der Ansteuerstrom E2 und damit das Schluckvolumen V_{gM2} des Hydraulikmotors 3 gegen Null gefahren, so dass im Zeitpunkt t₃ der zweite Hydraulikmotor 3 sozusagen ohne Beitrag leer mitläuft. Auf der großen Stellkolbenfläche des Stellzylinders 14 ist der Druck Null geworden, so dass durch die fehlende Druckansteuerung an den Wegeventilen 16 bzw. 17 die Sperrventile SVA und SVB je nach Drehrichtung die Hochdruckseite oder die Niederdruckseite des Motors sperren. Über die Rückschlagventile R_{VA} und R_{VB} (vgl. Figur 2) kann der noch mitdrehende Hydraulikmotor 3 Öl nachsaugen, damit je nach Genauigkeit der Nulllage an keinem der Anschlüsse Unterdruck entstehen kann. Der Hydraulikmotor 3 ist damit hydraulisch abgekuppelt. Er läuft mit, ohne ein Antriebs- oder Bremsmoment aufzubringen. Die Hydraulikmotoreinheit 1 wird allein von dem anderen Hydraulikmotor 2 betrieben.

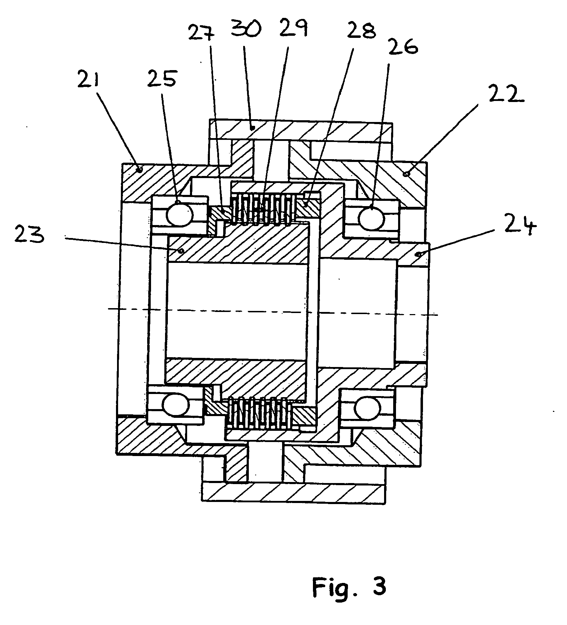

Um die Schleppverluste noch weiter zu reduzieren, wird bei Erreichen des Zeitpunktes t₃ die Kupplung 6 zwischen den beiden Motorwellen 4 und 5 gelöst und damit der Hydraulikmotor 3 auch mechanisch abgekuppelt. Die Kupplung 6, die in Figur 3 näher gezeigt ist, ist hierzu hydraulisch betätigbar. Sie umfasst in einem von dem Motorgehäuse 7 zumindest teilweise gebildeten Kupplungsgehäuse 20 einen großen Stellkolben 21 sowie einen diesem gegenüberliegenden kleinen Stellkolben 22, die in einem Verbindungszylinder 30 jeweils axial verschieblich geführt und in Richtung der Längsachsen der Motorwellen 4 und 5 verfahrbar sind. An dem großen Stellkolben 21 ist über ein Schrägkugellager 25 eine verzahnte Kupplungshülse 23 abgestützt, die in eine entsprechende Verzahnung auf der Motorwelle 4 eingreifen kann und auf dieser längsverschieblich sitzt. Die genannte verzahnte Kupplungshülse 23 trägt an ihrem Außenumfang weiterhin einen Lamellensatz 29, der über eine Druckscheibe 27 und das Schrägkugellager 25 von dem großen Stellkolben 21 her mit axialem Druck beaufschlagbar ist.

An dem kleinen Stellkolben 22 ist ebenfalls ein Schrägkugellager 26 abgestützt, an dem eine verzahnte Mitnehmerhülse 24 sitzt, die mit ihrer Verzahnung auf der Motorwelle 5 des zweiten Hydraulikmotors 3 in drehfestem Eingriff sitzt und auf der Motorwelle 5 ebenfalls axial verschieblich ist. Die Mitnehmerhülse 24 trägt an einem über die Kupplungshülse 23 vorspringenden Abschnitt radial nach innen vorspringend einen Lamellensatz 29, der mit dem Lamellensatz auf der Kupplungshülse 23 in Eingriff bringbar ist. Über eine Druckscheibe 28, die Mitnehmerhülse 24 und das Schrägkugellager 26 ist der Lamellensatz 29 von dem kleinen Stellkolben 22 her in entgegengesetzter Richtung mit axialem Druck beaufschlagbar.

Die Kupplung wird durch Beaufschlagen der beiden Stellkolben 21 und 22 mit Hydraulikdruck in und außer Eingriff gesteuert, und zwar folgendermaßen:

Um nach Erreichen des Zeitpunktes t₃ (vgl. Figur 4) den Hydraulikmotor 3 abzukuppeln, wird der an dem großen Stellkolben 21 anliegende Steuerdruck x (vgl. Figuren 1 und 2) reduziert, so dass der an dem kleinen Stellkolben 22 konstant anliegende Stelldruck, der in der gezeichneten Ausführung 30 bar betragen kann, die gesamte Kupplungsanordnung gemäß Figur 1 nach links schieben kann, so dass die Kupplungshülse 23 von der Motorwelle 5 des zweiten Hydraulikmotors 3 herunter geschoben wird. Der Stellkolben 22 schiebt über das Schrägkugellager 26, die Mitnehmerhülse 24, die Druckscheibe 28 und den Lamellensatz 29 auch die Kupplungshülse 23 nach links, bis diese vom Ende der Motorwelle 5 rutscht. In diesem Zustand wird der zweite Hydraulikmotor 3 über den noch in Eingriff befindlichen Lamellensatz 29 mitgenommen. Wird der Steuerdruck x jedoch noch weiter reduziert, reicht die Reibung des Lamellensatzes 29 für die weitere Mitnahme nicht mehr aus, so dass der Hydraulikmotor 3 gänzlich abgekuppelt wird und mangels eigenem Drehmoment stehen bleibt. Dieser Zustand ist im Zeitpunkt t₄ erreicht (vgl. Figur 4).

Soll das allein von dem Hydraulikmotor 2 aufgebrachte Antriebsmoment der Hydraulikmotoreinheit 1 weiter reduziert werden, kann durch Reduzierung des Ansteuerstromes E1 sodann weiterhin auch das Schluckvolumen V_{gM1} des Hydraulikmotors 2 und damit dessen Drehmoment reduziert werden. Dies zeigt die Figur 4 in dem Zeitraum zwischen t₄ und t₅.

Soll zu einem späteren Zeitpunkt der zweite Hydraulikmotor 3 wieder eingekuppelt werden, wird grundsätzlich in umgekehrter Reihenfolge vorgegangen. Der hydraulisch und mechanisch abgeschaltete Hydraulikmotor 3 wird zunächst wieder durch Zuschaltung der Hochdruckversorgung und Ausschwenken der Schrägscheibe 10 beschleunigt, bis die Drehzahl des Hydraulikmotors 3 im wesentlichen der Drehzahl des Hydraulikmotors 2 entspricht. Dies kann von einer Synchronisiereinrichtung, die einen Drehzahlsensor zur Erfassung der Drehzahlabweichung zwischen den beiden Motorwellen 4 und 5 sowie evtl. eine Positionserfassung der Zähne auf den Wellen bzw. einen Synchronisierring aufweisen kann, unterstützt werden, wobei über entsprechende Veränderung des Ansteuerstromes E2 auf die Drehzahl des Hydraulikmotors 3 entsprechend eingewirkt werden kann. Als Teil der Synchronisiereinrichtung kann hierbei auch der Lamellensatz 29 der Kupplung 6 wirken. Wird der auf den großen Stellkolben 21 wirkende Steuerdruck bei Null beginnend nach oben gefahren, werden über die Druckscheibe 27 die Lamellen des Lamellensatzes 29 aufeinander gepresst, so dass der Hydraulikmotor 2 im Leerlauf mitgenommen und auf die Drehzahl des Hydraulikmotors 2 beschleunigt wird. Nach einer vorbestimmten Beschleunigungszeit und/oder nach Unterschreiten einer vorbestimmten Drehzahlabweichung kann der Steuerdruck x über einen vorbestimmten Wert hinaus erhöht werden, so dass der Stellkolben 21 die gesamte Kupplungsanordnung gemäß Figur 1 nach rechts und damit die Kupplungshülse 23 auf die Motorwelle 5 schiebt, wodurch die beiden Motorwellen 4 und 5 drehfest miteinander verbunden werden. Hierdurch sind die beiden Motoren 2 und 3 wieder mechanisch miteinander verriegelt.

## Patentansprüche

1. Antriebsvorrichtung für ein Fahrzeug und/oder eine Baumaschine, mit einer Hydraulikmotoreinheit (1), die zwei hintereinander geschaltete Hydraulikmotoren (2, 3) aufweist, deren Motorwellen (4, 5) durch eine Kupplung (6) miteinander drehfest verbindbar sind, die lösbar ausgebildet und durch eine Betätigungsvorrichtung (21, 22) im Betrieb der Hydraulikmotoreinheit (1) aus- und einkuppelbar ist, wobei zumindest einer der Hydraulikmotoren (3) unabhängig vom Betrieb des anderen Hydraulikmotors (2) hydraulisch abschaltbar ausgebildet ist, und eine Steuereinrichtung zum Steuern des Ein- und/oder Auskuppelvorganges und/oder zum Steuern des Drehmoments und der Drehzahl des abschaltbaren Hydraulikmotors (3) vorgesehen ist, **dadurch gekennzeichnet, dass** die Steuereinrichtung mittels hydraulischer Steuermittel (12, 13, 14) vor dem Lösen der Kupplung (6) das Drehmoment des abzukuppelnden Hydraulikmotors (3) gegen Null steuert und/oder vor dem Einkuppeln der Kupplung (6) die Drehzahl (n_{M2}) des einzukuppelnden Hydraulikmotors (3) auf die Drehzahl (n_{M1}) des anderen Hydraulikmotors (2) steuert.

2. Antriebsvorrichtung nach dem vorhergehenden Anspruch, wobei die Steuereinrichtung in Abhängigkeit der Motordrehzahl (n_{M}), insbesondere bei Überschreiten einer vorbestimmten Motordrehzahl, einen Hydraulikmotor (3) mit dessen Drehmoment hydraulisch gegen Null steuert und/oder durch Lösen der Kupplung (6) mechanisch von dem anderen Hydraulikmotor (2) abkuppelt.

3. Antriebsvorrichtung nach dem vorhergehenden Anspruch, wobei die hydraulischen Steuermittel (12, 13, 14) das Schluckvolumen des ab- oder einzukuppelnden Hydraulikmotors (3) steuern.

4. Antriebsvorrichtung nach einem der vorhergehenden Ansprüche, wobei eine Synchronisiereinrichtung vorgesehen ist, die beim Einkuppeln mittels einer Drehzahlerfassungseinrichtung eine Drehzahlabweichung zwischen den Motorwellen (4, 5) der beiden Hydraulikmotoren (2, 3) erfasst und die hydraulischen Steuermittel (12, 13, 14) und/oder die Kupplung (6) in Abhängigkeit der erfassten Drehzahlabweichung ansteuert.

5. Antriebsvorrichtung nach einem der vorhergehenden Ansprüche, wobei die Hydraulikmotoren (2, 3) als Axialkolbenmaschinen mit veränderbarem Schluckvolumen ausgebildet sind.

6. Antriebsvorrichtung nach einem der vorhergehenden Ansprüche, wobei die Kupplung (6) hydraulisch betätigbar ausgebildet ist und von der Betätigungsvorrichtung (21, 22) mit einem veränderbaren Steuerdruck beaufschlagbar ist.

7. Antriebsvorrichtung nach einem der vorhergehenden Ansprüche, wobei die Kupplung (6) Reibkupplungsmittel (29), insbesondere eine Lamellenkupplungseinrichtung, und Formschlusskupplungsmittel, insbesondere eine verzahnte, auf beide Motorwellen (4, 5) aufschiebbare Kupplungshülse (23), aufweist, die vorzugsweise nach einer vorbestimmten Abfolge betätigbar sind.

8. Antriebsvorrichtung nach einem der vorhergehenden Ansprüche, wobei ein hydraulischer Schaltkreis (11) zur Ansteuerung und/oder Versorgung der Hydraulikmotoreinheit (1) hydraulische Steuermittel zur individuellen Ansteuerung eines jeden Hydraulikmotors (2, 3) unabhängig vom jeweils anderen Hydraulikmotor (3, 2) aufweist.

## Claims

1. Drive unit for a vehicle and/or a building machine, comprising a hydraulic motor unit (1), which has two hydraulic motors (2, 3), which are connected one behind the other and the motor shafts (4, 5) of which can be connected to each other so as to rotate together by a clutch (6), which is releasably formed and can be disengaged and engaged during the operation of the hydraulic motor unit (1) by an actuator (21, 22), at least one of the hydraulic motors (3) being formed such that it can be hydraulically switched off independently of the operation of the other hydraulic motor (2), and a control device being provided for controlling the engaging and/or disengaging operation and/or for controlling the torque and the rotational speed of the hydraulic motor (3) that can be switched off, **characterized in that** the control device uses hydraulic control means (12, 13, 14) to bring the torque of the hydraulic motor (3) to be disengaged towards zero before the release of the clutch (6) and/or to bring the rotational speed (n_{M2}) of the hydraulic motor (3) to be engaged to the rotational speed (n_{M1}) of the other hydraulic motor (2) before the engaging of the clutch (6).

2. Drive unit according to the preceding claim, the control device bringing the torque of one hydraulic motor (3) hydraulically towards zero, and/or mechanically disengaging it from the other hydraulic motor (2) by releasing the clutch (6), on the basis of the motor speed (n_{M}), in particular if a predetermined motor speed is exceeded.

3. Drive unit according to the preceding claim, the hydraulic control means (12, 13, 14) controlling the absorption volume of the hydraulic motor (3) to be disengaged or engaged.

4. Drive unit according to one of the preceding claims, a synchronizing device being provided, which device uses a speed detecting device to detect during engaging a difference in speed between the motor shafts (4, 5) of the two hydraulic motors (2, 3) and activates the hydraulic control means (12, 13, 14) and/or the clutch (6) on the basis of the difference in speed detected.

5. Drive unit according to one of the preceding claims, the hydraulic motors (2, 3) being formed as axial piston machines with variable absorption volume.

6. Drive unit according to one of the preceding claims, the clutch (6) being formed such that it can be hydraulically actuated and can be subjected to a variable control pressure by the actuator (21, 22).

7. Drive unit according to one of the preceding claims, the clutch (6) having friction coupling means (29), in particular a multi-disc clutch device, and positive coupling means, in particular a toothed coupling sleeve (23) that can be pushed onto both motor shafts (4, 5), which means can preferably be actuated in accordance with a predetermined sequence.

8. Drive unit according to one of the preceding claims, a hydraulic circuit (11) for activating and/or powering the hydraulic motor unit (1) having hydraulic control means for the individual activation of each hydraulic motor (2, 3) independently of the other hydraulic motor (3, 2) respectively.

## Revendications

1. Dispositif d'entraînement pour un véhicule et/ou une machine de construction, avec une unité de moteurs hydrauliques (1) qui présente deux moteurs hydrauliques (2, 3) commutés l'un derrière l'autre, dont les arbres moteurs (4, 5) peuvent être reliés d'une manière solidaire en rotation par un couplage (6), qui est réalisé amoviblement et peut être couplé et découplé par un dispositif d'actionnement (21, 22) lors du fonctionnement de l'unité de moteurs hydrauliques (1), où au moins un des moteurs hydrauliques (3) est réalisé de façon à pouvoir être mis hors service hydrauliquement indépendamment du fonctionnement de l'autre moteur hydraulique (2), et où est prévue une installation de commande pour la commande de l'opération de couplage et/ou découplage et/ou pour la commande du couple de rotation ou du nombre de tours du moteur hydraulique (3) pouvant être mis hors service, **caractérisé en ce que** l'installation de commande commande au moyen de moyens de commande hydrauliques (12, 13, 14), avant le relâchement du couplage (6), le couple de rotation du moteur hydraulique (3) à découpler vers zéro et/ou avant l'engagement du couplage (6), commande le nombre de tours (n_{M2}) du moteur hydraulique à coupler (3) au nombre de tours (n_{M1}) de l'autre moteur hydraulique (2).

2. Dispositif d'entraînement selon la revendication précédente, dans lequel l'installation de commande, en fonction du nombre de tours du moteur (n_{M}), en particulier lors du dépassement d'un nombre de tours prédéterminé du moteur, commande un moteur hydraulique (3) avec son couple de rotation hydrauliquement vers zéro et/ou, par relâchement du couplage (6), le découple mécaniquement de l'autre moteur hydraulique (2).

3. Dispositif d'entraînement selon la revendication précédente, dans lequel les moyens de commande hydrauliques (12, 13, 14) commandent le volume d'absorption du moteur hydraulique (3) à découpler ou à coupler.

4. Dispositif d'entraînement selon l'une des revendications précédentes, dans lequel une installation de synchronisation est prévue qui, lors du couplage au moyen d'une installation de détection de nombre de tours, détecte un écart du nombre de tours entre les arbres moteurs (4, 5) des deux moteurs hydrauliques (2, 3) et commande les moyens de commande hydrauliques (12, 13, 14) et/ou le couplage (6) en fonction de l'écart détecté du nombre de tours.

5. Dispositif d'entraînement selon l'une des revendications précédentes, dans lequel les moteurs hydrauliques (2, 3) sont réalisés comme des machines à piston axial avec un volume d'absorption modifiable.

6. Dispositif d'entraînement selon l'une des revendications précédentes, dans lequel le couplage (6) est réalisé d'une manière actionnable hydrauliquement et peut être chargé par le dispositif d'actionnement (21, 22) avec une pression de commande modifiable.

7. Dispositif d'entraînement selon l'une des revendications précédentes, où le couplage (6) présente des moyens de couplage à frottement (29), en particulier une installation de couplage lamellaire ainsi que des moyens de couplage par concordance des formes, en particulier un manchon de couplage denté (23) pouvant être poussé sur les deux arbres moteurs (4, 5) qui sont actionnables de préférence selon un ordre prédéterminé.

8. Dispositif d'entraînement selon l'une des revendications précédentes, dans lequel un circuit hydraulique (11), pour la commande et/ou alimentation de l'unité de moteurs hydrauliques (1), présente des moyens de commande hydrauliques pour la commande individuelle de chaque moteur hydraulique (2, 3) indépendamment à chaque fois de l'autre moteur hydraulique (3, 2).
